# EUROPÄISCHE PATENTSCHRIFT

(11) **EP 3 175 150 B1**
(45) Veröffentlichungstag und Bekanntmachung des Hinweises auf die Patenterteilung: **07.08.2019**
(21) Anmeldenummer: 15744484.5
(22) Anmeldetag: 28.07.2015
(51) Int. Cl.: F16H 61/30, F16H 59/38, F16H 59/70, F16H 61/00, F16H 63/30

(54) **HYDRAULISCHE ODER PNEUMATISCHE BETÄTIGUNGSVORRICHTUNG FÜR DIE BETÄTIGUNG VON STELLGLIEDERN IN EINEM KRAFTFAHRZEUGGETRIEBE**
HYDRAULIC OR PNEUMATIC OPERATING DEVICE FOR OPERATING ACTUATORS IN A MOTOR VEHICLE TRANSMISSION
DISPOSITIF D'ACTIONNEMENT HYDRAULIQUE OU PNEUMATIQUE POUR ACTIONNER DES ACTIONNEURS DANS UNE BOÎTE DE VITESSE DE VÉHICULE AUTOMOBILE

(30) Priorität: 31.07.2014 DE 102014011177
(43) Veröffentlichungstag der Anmeldung: 07.06.2017
(73) Patentinhaber: FTE automotive GmbH, 96106 Ebern (DE)
(72) Erfinder: MACHT, Egid, 81247 München (DE); STÖSSEL, Roland, 97514 Oberaurach Trossenfurt (DE); STÖHR, Reinhold, 96106 Ebern (DE); FECKE, Karin, 97631 Bad Königshofen (DE); FUCHS, Dietmar, 96524 Föritz / OT Heubisch (DE); REUL, Alexander, 96158 Frensdorf (DE); WILL, Wilhelm, 97500 Ebelsbach / Rudendorf (DE); VOIGT, Christian, 96106 Ebern (DE); HEUBNER, Wilhelm, 96274 Itzgrund (DE)
(74) Vertreter: Oppermann, Mark
(86) Internationale Anmeldenummer: PCT/EP2015/001550
(87) Internationale Veröffentlichungsnummer: WO 2016/015858

(56) Entgegenhaltungen:
- DE-A1-102006 050 429
- DE-A1-102011 107 263
- US-A1- 2008 295 634
- US-A1- 2011 203 361

## Beschreibung

### TECHNISCHES GEBIET

Die vorliegende Erfindung bezieht sich auf eine hydraulische oder pneumatische Betätigungsvorrichtung für die Betätigung von Stellgliedern in einem Kraftfahrzeuggetriebe, mit wenigstens zwei Stellzylindern, die jeweils nur ein Zylindergehäuse und jeweils nur einen darin entlang einer Zylinderachse längsverschieblich geführten Stellkolben aufweisen, der hydraulisch oder pneumatisch beaufschlagbar und mit einem der Stellglieder wirkverbunden ist, wobei die wenigstens zwei Stellzylinder zu einer Einheit zusammengefasst sind, die an oder in einem Getriebegehäuse des Kraftfahrzeuggetriebes anflanschbar ist. Derartige Betätigungsvorrichtungen kommen etwa für automatisierte Schaltgetriebe in der Automobilindustrie massenweise zum Einsatz - dort auch "Gangsteller" genannt - und dienen hier beispielsweise dazu, an Schaltstangen des Getriebes befestigte Schaltgabeln zum Gangwechsel zu betätigen, d.h. zu verschieben und ggf. zu positionieren.

### STAND DER TECHNIK

Die gattungsgemäße Druckschrift DE 103 42 389 A1 offenbart eine hydraulische Ansteuerungseinrichtung für ein Getriebe, umfassend insgesamt vier Stellzylinder (dort: Aktuator- bzw. Hydraulikzylindereinheiten), die ein Zylindergehäuse (Haupteinheit mit jeweiligen Zylinderräumen) und darin entlang von Zylinderachsen längsverschieblich geführte Stellkolben (Kolben) aufweisen, welche jeweils hydraulisch beaufschlagbar und mit einem der Stellglieder (Schaltstangen mit Schaltgabeln) des Getriebes wirkverbunden sind. Bei diesem Stand der Technik sind die Stellzylinder bereits montagefreundlich zu einer Baueinheit zusammengefasst, die über eine Flanschfläche an einem Gehäuse des Getriebes anflanschbar ist.

In der Druckschrift DE 103 42 389 A1 wird ferner allgemein angesprochen, dass die mittels der hydraulischen Ansteuerungseinrichtung bewirkten Verschiebebewegungen wegsensiert oder weggeregelt erfolgen können, falls dies aus Steuerungs- und/oder Sicherheitsgründen gewünscht wird. Diesbezügliche Details gibt diese Druckschrift indes nicht her.

In einem solchen Fall ist zur Ermittlung der Schaltstellung üblicherweise ein Positionsgeber, beispielsweise ein Magnet, an der Schaltgabel oder, wie z.B. in der Druckschrift DE 10 2007 062 353 A1 beschrieben, an der Schaltstange vorgesehen, welcher mit einem geeignet getriebegehäusefest angeordneten Positionssensor zusammenwirkt. Bei beispielsweise vier Schaltstangen, wie im eingangs erwähnten Stand der Technik gezeigt, ist der mit der Montage und Kontaktierung einer solchen Sensorik verbundene Aufwand freilich nicht unerheblich.

Aus der Druckschrift US 2011/0203361 A1 (Fig. 4 & 5) ist ferner ein integriertes Steuermodul für ein Doppelkupplungsgetriebe bekannt, welches eine Mehrzahl von hydraulisch beaufschlagbaren Betätigungskolben aufweist, die mit Schaltgabeln wirkverbunden sind, um diese wahlweise zu verschieben. Dabei sind jeweils einem Betätigungskolben zwei Zylindergehäuse zugeordnet, und zwar für jede Betätigungsrichtung ein Zylindergehäuse, mit einer "freien", d.h. von außen zugänglichen Ringnut am Betätigungskolben dazwischen, für die Verbindung zur Schaltgabel, wobei zudem jedes Zylindergehäuse mindestens zwei verschiedene Betätigungskolben aufnimmt.

Genauer gesagt ist die Anordnung so getroffen, dass von insgesamt vier Betätigungskolben jeweils zwei Betätigungskolben koaxial hintereinander sitzend ein Kolbenpaar bilden und die auf diese Weise gebildeten zwei Kolbenpaare parallel zueinander angeordnet sind, wobei insgesamt drei Zylindergehäuse vorgesehen sind, nämlich zwei äußere Zylindergehäuse mit jeweils zwei Zylinderbohrungen und ein dazwischen sitzendes, mittiges Zylindergehäuse mit vier Zylinderbohrungen. Die so bewirkte räumliche Nähe und Ausrichtung der Betätigungskolben zueinander führt allerdings dazu, dass aufwändig gestaltete, mechanische Übertragungsglieder vorzusehen sind, um die Kolbenbewegungen auf die Schaltgabeln zu übertragen.

Zur Erfassung der Kolbenbewegungen ist bei diesem Stand der Technik des Weiteren das mittige Zylindergehäuse mit insgesamt vier Sensoren versehen, die jeweils einem Betätigungskolben zugeordnet sind. Jeder Betätigungskolben trägt hierbei ein Signalelement, welches mit dem jeweils zugeordneten Sensor zusammenwirkt. Die elektrischen Leitungen zu/von den Sensoren sind auf dem mittigen Zylindergehäuse kreuzförmig zu einem Hauptabschnitt zusammengeführt, der mit einem Verbindungsblock an dem mittigen Zylindergehäuse endet. Über den Verbindungsblock besteht eine elektrische Verbindung zu einer bezüglich des mittigen Zylindergehäuses unmittelbar angrenzend angeordneten, im Steuermodul integrierten, elektronischen Getriebesteuerbaugruppe. An Letzterer sind schließlich auch zwei Drehzahlsensoren angebracht, die dazu dienen, im Betrieb die Drehzahl von zwei Getriebeeingangswellen zu erfassen.

Aufgrund der räumlichen Nähe des mittigen Zylindergehäuses zur Getriebesteuerbaugruppe, deren Integration im Steuermodul und der Integration der kompletten Hubsensorik im mittigen Zylindergehäuse stellt sich bei diesem Stand der Technik die oben geschilderte Kontaktierungsproblematik bei der Montage indes nicht.

### AUFGABENSTELLUNG

Der Erfindung liegt die Aufgabe zugrunde, eine hydraulische oder pneumatische Betätigungsvorrichtung für die Betätigung von Stellgliedern in einem Kraftfahrzeuggetriebe zu schaffen, welche mit einer Sensorik versehen ist, deren Montage und Kontaktierung nur einen möglichst geringen Aufwand erfordert.

### DARSTELLUNG DER ERFINDUNG

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 8.

Erfindungsgemäß umfasst eine hydraulische oder pneumatische Betätigungsvorrichtung für die Betätigung von Stellgliedern in einem Kraftfahrzeuggetriebe wenigstens zwei Stellzylinder, die jeweils nur ein Zylindergehäuse und jeweils nur einen darin entlang einer Zylinderachse längsverschieblich geführten Stellkolben aufweisen, der hydraulisch oder pneumatisch beaufschlagbar und mit einem der Stellglieder wirkverbunden ist, wobei die wenigstens zwei Stellzylinder zu einer Einheit zusammengefasst sind, die an oder in einem Getriebegehäuse des Kraftfahrzeuggetriebes anflanschbar ist, wobei jedem Zylindergehäuse ein Sensor zur Positionserfassung eines am jeweiligen Stellkolben angebrachten Signalelements zugeordnet ist, wobei in der Einheit eine mit den Sensoren signalverbundene elektrische Schnittstelle integriert ist, die zur Aufnahme eines Steckers zur elektrischen Verbindung mit einer Getriebesteuerung ausgebildet ist und über welche die Sensoren gemeinsam kontaktierbar sind, und wobei ferner wenigstens ein Sensor zur Drehzahlsensierung am Kraftfahrzeuggetriebe und/oder ein Anschluss für einen Sensor zur Drehzahlsensierung am Kraftfahrzeuggetriebe in der Einheit integriert und ebenfalls zur gemeinsamen Kontaktierung mit der elektrischen Schnittstelle signalverbunden ist.

Mit anderen Worten gesagt trägt die Betätigungsvorrichtung als solche schon die für die Erfassung der bewirkten Stellbewegungen benötigte Sensorik. Bei Montage der Betätigungsvorrichtung ist lediglich die Getriebesteuerung, die separat von der Betätigungsvorrichtung an gegen Umgebungseinflüsse wie Feuchtigkeit, Temperatur und Betriebsmedien besonders geschützter Stelle im Kraftfahrzeug angeordnet ist, an die elektrische Schnittstelle der Betätigungsvorrichtung anzuschließen, wobei zugleich die Hubsensorik und die Drehzahlsensorik mit der Getriebesteuerung kontaktiert werden. Die im Stand der Technik übliche Montage von einzelnen Signalelementen und Sensoren an den Stellgliedern (Schaltstangen/Schaltgabeln) bzw. im Getriebegehäuse und deren Verkabelung können vorteilhaft entfallen. Neben dieser deutlichen Vereinfachung der Montage und Kontaktierung kann die Sensorik so auch schon vor Anbringung der Betätigungsvorrichtung vorgetestet und ggf. vorprogrammiert werden.

In einer besonders kompakten und montagefreundlichen Ausbildung der Betätigungsvorrichtung kann die Einheit über eine Flanschfläche einer die Zylindergehäuse verbindenden Flanschplatte an oder in dem Getriebegehäuse des Kraftfahrzeuggetriebes anflanschbar sein, wobei die Sensoren, ggf. der Anschluss und die Schnittstelle über eine Flexleiterplatte signalverbunden sind, die der Außenkontur der Zylindergehäuse problemlos folgend auf der - im Getriebegehäuse besonders geschützten - Seite der Flanschfläche der Einheit verlegt ist.

Hierbei kann jedes Zylindergehäuse außenumfangsseitig eine Aufnahmeaussparung für den zugeordneten Sensor aufweisen, wobei die Flexleiterplatte auf einer Seite mit den Sensoren bestückt ist und auf der anderen Seite im Bereich der Sensoren Deckel trägt, die dazu dienen, die Aufnahmeaussparungen mit den darin aufgenommenen Sensoren schützend zu verschließen. Eine derart vorbestückte Baugruppe ist besonders einfach zu montieren; eine nachträgliche elektrische Verschaltung der einzelnen Bauteile entfällt.

Entsprechendes gilt für eine alternative, noch besser gegen Umgebungseinflüsse wie Feuchtigkeit, Temperatur und Betriebsmedien geschützte Variante der Betätigungsvorrichtung, bei der jedes Zylindergehäuse außenumfangsseitig einen von zwei parallelen, einander zugewandten Längsnuten seitlich begrenzten Aufnahmeabschnitt für den zugeordneten Sensor aufweist, wobei jeder auf der Flexleiterplatte bestückte Sensor auf ein und derselben Seite der Flexleiterplatte von einem Rahmen umgeben ist, der mit dem jeweiligen Sensor und der Flexleiterplatte vermittels eines Dichtmaterials vergossen ist und auf voneinander abgewandten Seiten zwei quer zur Flexleiterplatte verlaufende, parallele Stege aufweist, die in die Längsnuten am Aufnahmeabschnitt des jeweiligen Zylindergehäuses einsteckbar sind, um den zugeordneten Sensor festzulegen.

Es können ferner nahe den Zylindergehäusen Zungen zum Halten und Führen der Flexleiterplatte einstückig an der Flanschplatte angeformt sein, was nicht nur eine besonders einfache Form der Positionierung und Befestigung der Flexleiterplatte darstellt, sondern auch bei einem gemeinsamen Kunststoff-Spritzgießen der Zylindergehäuse und der Flanschplatte leicht mit erzeugt werden kann.

Grundsätzlich ist es möglich, an den Stellkolben geeignet eingeklipste Magnete als Signalelemente zu verwenden. Im Hinblick auf die Befestigungssicherheit ist allerdings eine Ausgestaltung bevorzugt, bei der jeder Stellkolben mit einem Sensierfortsatz versehen ist, an dem ein Magnet als Signalelement durch Kunststoffumspritzen angebracht ist.

Ferner ist es prinzipiell denkbar, die mit den Stellkolben wirkverbundenen Stellglieder, etwa die Schaltstangen, alleine im Getriebegehäuse bzw. dessen Wandungen geeignet zu führen. Demgegenüber bevorzugt ist es indes, wenn jedes Zylindergehäuse an seinem von dem Sensor entfernten Ende mit einem Gehäusefortsatz zur Aufnahme einer Führungsbuchse versehen ist, in der eine mit dem jeweiligen Stellkolben verbundene Kolbenstange geführt ist, so dass der Betätigungsvorrichtung auch eine Führungs- bzw. Lagerfunktion für die Stellglieder zukommt. In diesem Fall können die Schaltstangen z.B. einfach als Rohr ausgebildet oder mit einem rohrförmigen Ende versehen sein, in das die Kolbenstange eingesteckt wird.

Soweit schließlich der Betätigungsvorrichtung auch eine medientrennende Funktion zukommen soll, und zur Verbessung des Druckaufbauverhaltens bei hydraulischer oder pneumatischer Beaufschlagung des Stellkolbens auf der Kolbenstangenseite, kann in dem Gehäusefortsatz auch eine mit der Kolbenstange zusammenwirkende, sich an die Führungsbuchse in axialer Richtung anschließende Stangendichtung aufgenommen sein, wobei vorteilhaft ein am Gehäusefortsatz angebrachter ringförmiger Deckel sowohl die Führungsbuchse als auch die Stangendichtung im Gehäusefortsatz sichert.

### KURZE BESCHREIBUNG DER ZEICHNUNGEN

Im Folgenden wird die Erfindung anhand bevorzugter Ausführungsbeispiele unter Bezugnahme auf die beigefügten, z.T. schematischen Zeichnungen näher erläutert, in denen zur Vereinfachung der Darstellung elastomere bzw. elastische Teile im unverformten Zustand dargestellt sind. In den Zeichnungen zeigen:
- Fig. 1: eine perspektivische Ansicht einer hydraulischen Betätigungsvorrichtung für die Betätigung von Stellgliedern in einem Kraftfahrzeuggetriebe nach einem bevorzugten Ausführungsbeispiel der Erfindung im nicht-montierten Zustand von schräg oben / vorne mit Blick auf die von einer Flanschfläche der Betätigungsvorrichtung abgewandten Seite der Betätigungsvorrichtung;
- Fig. 2: eine perspektivische Ansicht der Betätigungsvorrichtung gemäß Fig. 1 im nicht-montierten Zustand von schräg unten / hinten mit Blick auf die Flanschfläche der Betätigungsvorrichtung, über die die Betätigungsvorrichtung an einer Trennwand eines Getriebegehäuses des Kraftfahrzeuggetriebes angeflanscht werden kann;
- Fig. 3: eine gegenüber dem Maßstab der Fig. 1 und 2 verkleinerte Vorderansicht der Betätigungsvorrichtung gemäß Fig. 1 in einem an einem abgebrochen dargestellten Getriebegehäuse montierten Zustand;
- Fig. 4: eine abgebrochene, vergrößerte Schnittansicht der Betätigungsvorrichtung gemäß Fig. 1 im montierten Zustand entsprechend der Schnittverlaufslinie IV-IV in Fig. 3, zur Illustration eines Festlager-Befestigungspunkts der Betätigungsvorrichtung am Getriebegehäuse;
- Fig. 5: eine abgebrochene, vergrößerte Schnittansicht der Betätigungsvorrichtung gemäß Fig. 1 im montierten Zustand entsprechend der Schnittverlaufslinie V-V in Fig. 3, wobei die Schnittebene entlang einer Zylinderachse eines der Stellzylinder der Betätigungsvorrichtung verläuft und auf der in Fig. 5 rechten Seite exemplarisch auch die Anbindung einer Schaltstange als Stellglied des Kraftfahrzeuggetriebes an eine Kolbenstange des Stellzylinders dargestellt ist;
- Fig. 6: eine gegenüber dem Maßstab der Fig. 5 vergrößerte Ansicht des Details VI in Fig. 5, zur Veranschaulichung einer ersten Variante von Druckdichtungen an einem Zylinderraumabschnitt des Stellzylinders;
- Fig. 7: eine gegenüber dem Maßstab der Fig. 5 vergrößerte Ansicht des Details VII in Fig. 5, zur Illustration einer Flanschdichtung an der an einer Flanschplatte der Betätigungsvorrichtung ausgebildeten Flanschfläche der Betätigungsvorrichtung;
- Fig. 8: eine abgebrochene, vergrößerte Schnittansicht der Betätigungsvorrichtung gemäß Fig. 1 im montierten Zustand entsprechend der Schnittverlaufslinie VIII-VIII in Fig. 3, zur exemplarischen Darstellung weiterer Befestigungspunkte der Betätigungsvorrichtung am Getriebegehäuse;
- Fig. 9: eine abgebrochene, vergrößerte Schnittansicht der Betätigungsvorrichtung gemäß Fig. 1 im montierten Zustand entsprechend der Schnittverlaufslinie IX-IX in Fig. 3, zur Illustration eines Loslager-Befestigungspunkts der Betätigungsvorrichtung am Getriebegehäuse;
- Fig. 10: eine gegenüber dem Maßstab der Fig. 1 verkleinerte Rückansicht der Betätigungsvorrichtung gemäß Fig. 1 im nicht-montierten Zustand, mit Blickrichtung senkrecht auf die Flanschfläche;
- Fig. 11: eine abgebrochene, vergrößerte Schnittansicht der Betätigungsvorrichtung gemäß Fig. 1 entsprechend der Schnittverlaufslinie XI-XI in Fig. 10, zur weiteren Illustration des Loslager-Befestigungspunkts der Betätigungsvorrichtung;
- Fig. 12: eine abgebrochene, vergrößerte Schnittansicht der Betätigungsvorrichtung gemäß Fig. 1 entsprechend der zur Schnittverlaufslinie XI-XI senkrechten Schnittverlaufslinie XII-XII in Fig. 10, wobei der Loslager-Befestigungspunkt der Betätigungsvorrichtung in einer Ebene geschnitten gezeigt ist, die zentral durch den Festlager-Befestigungspunkt der Betätigungsvorrichtung hindurch verläuft (siehe die gestrichelt verlängerte Schnittverlaufslinie);
- Fig. 13: eine abgebrochene, vergrößerte Schnittansicht der Betätigungsvorrichtung gemäß Fig. 1 entsprechend der Schnittverlaufslinie XIII-XIII in Fig. 10, zur Veranschaulichung weiterer Details der Stellzylinder der Betätigungsvorrichtung in einer zur StellzylinderSchnittebene der Fig. 5 senkrecht verlaufenden Stellzylinder-Schnittebene;
- Fig. 14: eine nach links und unten abgebrochene, vergrößerte Schnittansicht einer Betätigungsvorrichtung mit Schnittverlauf entsprechend der Schnittverlaufslinie XIV-XIV in Fig. 10, zur Illustration einer zweiten Variante der Druckdichtungen an den Stellzylindern, die sich von der ersten Variante gemäß Fig. 6 unterscheidet;
- Fig. 15: eine perspektivische Ansicht einer auf einer Seite mit Sensoren und (Einsteck)Rahmen zur Befestigung an einer Betätigungsvorrichtung bestückten Flexleiterplatte einer integrierten Sensorik der Betätigungsvorrichtung im nicht-montierten Zustand, als Alternative zu der in den Fig. 2, 5 und 10 im montierten Zustand gezeigten Flexleiterplatte der Sensorik, die im Gegensatz zur Flexleiterplatte von Fig. 15 auf gegenüberliegenden Seiten mit Sensoren und (Verschluss)Deckeln bestückt ist;
- Fig. 16: eine hinsichtlich des Schnittverlaufs im Stellzylinder der Fig. 5 entsprechende, abgebrochene Schnittansicht der nicht-montierten Betätigungsvorrichtung im Endbereich des dem Festlager-Befestigungspunkt nächstgelegenen Stellzylinders, mit montierter Flexleiterplatte von Fig. 15;
- Fig. 17: eine abgebrochene Schnittansicht der Betätigungsvorrichtung entsprechend der Schnittverlaufslinie XVII-XVII in Fig. 16;
- Fig. 18: eine perspektivische Explosionsdarstellung einer Betätigungsvorrichtung im nicht-montierten Zustand von schräg oben / hinten mit Blick auf die Flanschfläche, zur Veranschaulichung von Stellzylinder-Druckdichtungen gemäß einer von den Varianten der Fig. 6 und 14 verschiedenen, dritten Variante der Druckdichtungen;
- Fig. 19: eine hinsichtlich des Schnittverlaufs der Fig. 13 entsprechende Schnittansicht der Betätigungsvorrichtung im nicht-montierten Zustand, zur weiteren Illustration der montierten Druckdichtungen nach der dritten Variante gemäß Fig. 18; und
- Fig. 20: eine gegenüber dem Maßstab der Fig. 19 vergrößerte Ansicht des Details XX in Fig. 19.

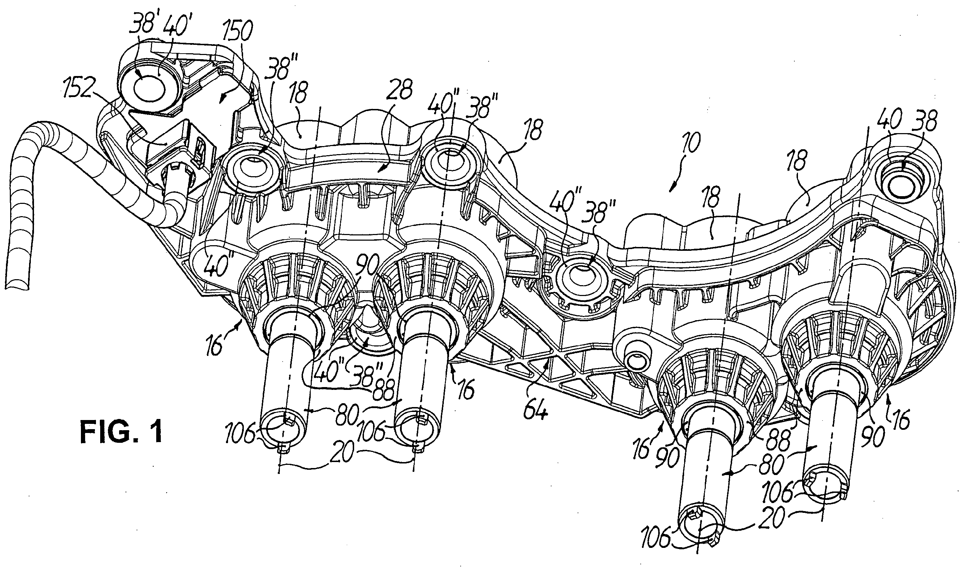

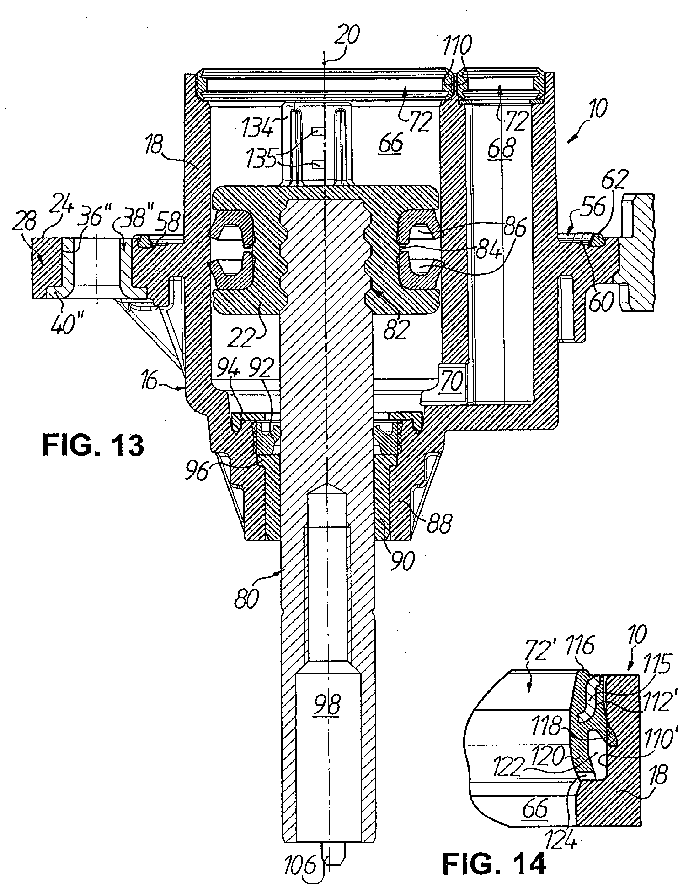

Insoweit stellen die Fig. 1 bis 13 ein bevorzugtes Ausführungsbeispiel der Erfindung dar, die Fig. 14 bis 20 hingegen zeigen Varianten der Druckdichtungen und Alternativen der Sensorik zu weiteren Ausführungsbeispielen. In allen Zeichnungen - und in der folgenden Beschreibung - wurde auf eine nähere Darstellung bzw. Erläuterung der zu betätigenden Getriebestellglieder (z.B. Schaltstangen mit Schaltgabeln) verzichtet, weil diese Elemente und deren Funktion dem Fachmann hinreichend bekannt sind und diesbezügliche Ausführungen für das Verständnis der vorliegenden Erfindung nicht erforderlich erscheinen.

### DETAILLIERTE BESCHREIBUNG DER AUSFÜHRUNGSBEISPIELE

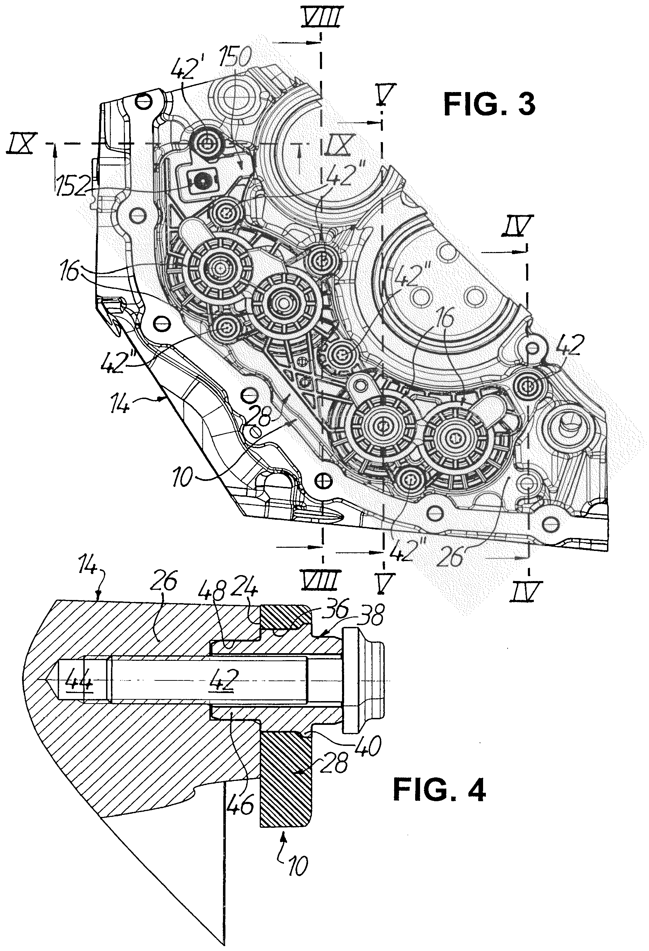

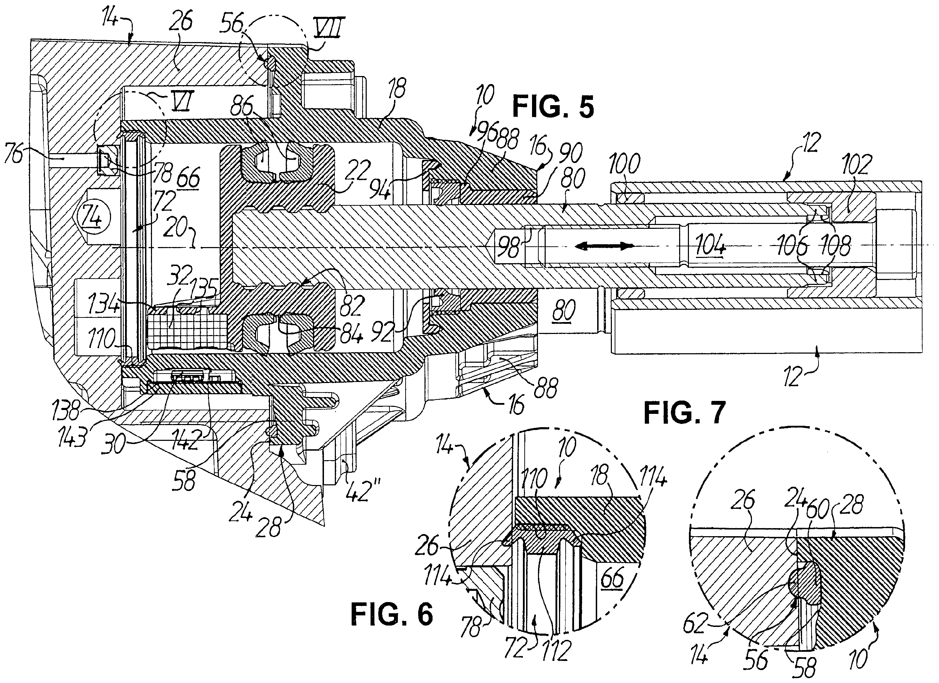

In den Figuren beziffert das Bezugszeichen 10 allgemein eine hydraulische Betätigungsvorrichtung für die Betätigung von Stellgliedern, z.B. Schaltstangen 12 (in Fig. 5 angedeutet) mit Schaltgabeln (nicht gezeigt), in einem Kraftfahrzeuggetriebe, von dem in den Fig. 3 bis 9 Teile des Getriebegehäuses 14 zu sehen sind. Die Betätigungsvorrichtung 10 umfasst wenigstens zwei, in den dargestellten Ausführungsbeispielen vier Stellzylinder 16, die jeweils ein Zylindergehäuse 18 und einen darin entlang einer Zylinderachse 20 längsverschieblich geführten Stellkolben 22 aufweisen, der beidseitig hydraulisch beaufschlagbar und mit einem der Stellglieder auf noch zu beschreibende Weise wirkverbunden ist.

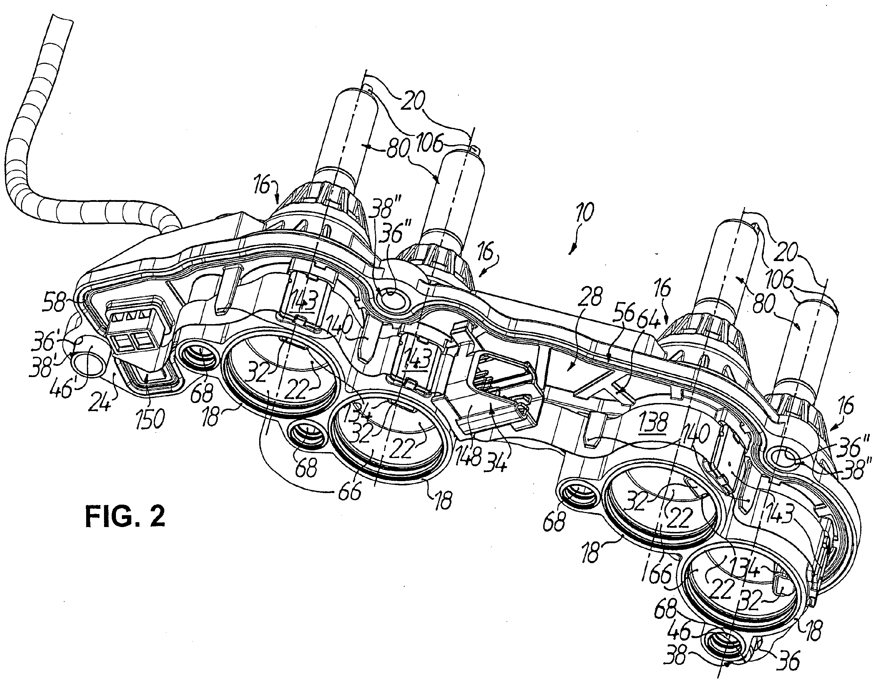

Die Stellzylinder 16 sind auf besondere Weise zu einer Einheit zusammengefasst, die über eine Flanschfläche 24 von einer Seite an einer Trennwand 26 des Getriebegehäuses 14 anflanschbar ist, und zwar sind die Zylindergehäuse 18 der Stellzylinder 16 einstückig mit einer quer zu den Zylinderachsen 20 verlaufenden Flanschplatte 28, an der die Flanschfläche 24 ausgebildet ist, aus einem Kunststoff, beispielsweise Polyphtalamid (PPA) mit einem vorbestimmten Glasfaseranteil von z.B. 50%, spritzgegossen. Hierbei stehen die Zylindergehäuse 18 in Richtung der Zylinderachsen 20 wenigstens auf der Seite der Flanschfläche 24 über die Flanschplatte 28 hinaus vor, wie insbesondere in den Fig. 2, 5, 13, 18 und 19 zu erkennen ist, so dass die Zylindergehäuse 18 im montierten Zustand der Betätigungsvorrichtung 10 teilweise in der Trennwand 26 des Getriebegehäuses 14 "versenkt" sind bzw. dort "eintauchen" (vgl. Fig. 5). Die Betätigungsrichtungen - entlang der Zylinderachsen 20 - der Stellzylinder 16 verlaufen dabei sämtlich parallel zueinander. Die Flanschfläche 24 der Flanschplatte 28 hingegen verläuft quer bzw. im rechten Winkel zu den Betätigungsrichtungen der Stellzylinder 16.

Wie nachfolgend ebenfalls noch näher beschrieben werden wird ist jedem Zylindergehäuse 18 der Betätigungsvorrichtung 10 ein Sensor 30 (siehe die Fig. 5 und 15 bis 17) zur Positionserfassung eines am jeweiligen Stellkolben 22 angebrachten Signalelements 32 zugeordnet, wobei in der Einheit eine mit den Sensoren 30 signalverbundene elektrische Schnittstelle 34 (vgl. die Fig. 2, 10 und 15) integriert ist, über welche die Sensoren 30 gemeinsam kontaktierbar sind.

Zur Befestigung der Betätigungsvorrichtung 10 am bzw. im Getriebegehäuse 14 ist die Flanschplatte 28 mit einer Mehrzahl von, im dargestellten Ausführungsbeispiel insgesamt sieben über den Umfang am Flanschplattenrand verteilten, senkrecht zur Flanschfläche 24 verlaufenden Befestigungslöchern 36, 36', 36" versehen, zu denen Einzelheiten den Fig. 4, 8, 9, 11 und 12 zu entnehmen sind. Demgemäß ist jedes Befestigungsloch 36, 36', 36" mit einer metallischen Stützhülse 38, 38', 38'' ausgekleidet, die auf einer von der Flanschfläche 24 abgewandten Seite mit einem Zugbund 40, 40', 40" für eine Befestigungsschraube 42, 42', 42'' versehen ist, die sich mit Radialspiel durch die jeweilige Stützhülse 38, 38', 38'' hindurch erstreckt und im montierten Zustand der Betätigungsvorrichtung 10 in eine zugeordnete Gewindebohrung 44, 44', 44'' (vgl. die Fig. 4, 8 und 9) der Trennwand 26 des Getriebegehäuses 14 eingeschraubt ist, um die Flanschfläche 24 der Flanschplatte 28 gegen die Trennwand 26 zu ziehen.

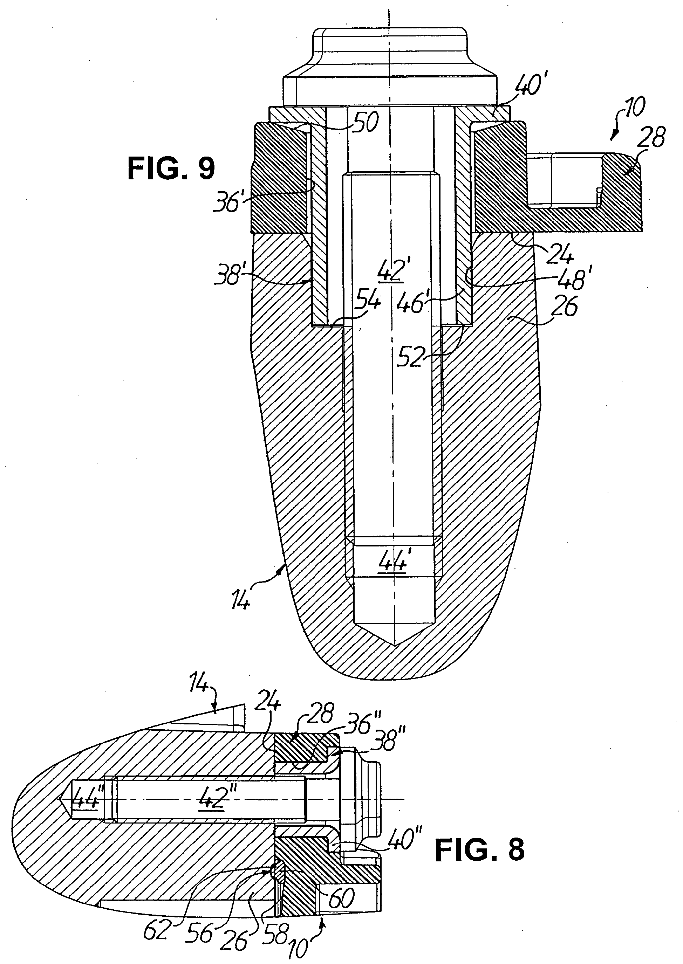

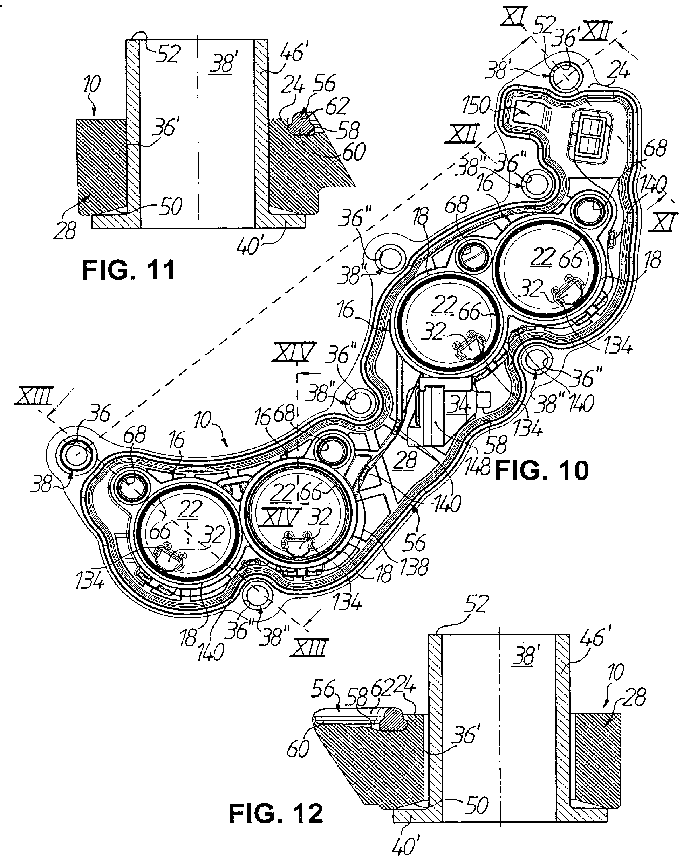

Hierbei bilden die in der Ebene der Flanschfläche 24 gesehen am weitesten voneinander entfernten Befestigungslöcher ein Festlager-Befestigungsloch 36 und ein Loslager-Befestigungsloch 36', an denen die Stützhülsen 38, 38' mit Zentrierfortsätzen 46, 46' für einen formschlüssigen Eingriff in zugeordneten Zentrieraussparungen 48, 48' in der Trennwand 26 des Getriebegehäuses 14 über die Flanschfläche 24 vorstehen (siehe die Fig. 4 und 9). Während das Festlager-Befestigungsloch 36 die zugeordnete Stützhülse 38, welche schon beim Spritzgießen der Flanschplatte 28 im Kunststoff mit eingebettet werden kann, radialspielfrei umgibt, ist das Loslager-Befestigungsloch 36' gemäß den Fig. 10 und 12 als mit dem Festlager-Befestigungsloch 36 ausgefluchtetes Langloch gestaltet, in dem die zugeordnete Stützhülse 38' entsprechend der Ausfluchtung des Langlochs bewegbar aufgenommen ist, so dass Abstandstoleranzen ausgeglichen werden können. Die übrigen fünf Stützhülsen 38'' hingegen enden just an der Flanschfläche 24 oder kurz davor (vgl. Fig. 8) und können ebenfalls radialspielfrei beim Spritzgießen der Flanschplatte 28 im Kunststoff mit eingebettet werden.

Eine weitere Besonderheit der Loslager-Befestigungssituation ist in den Fig. 9, 11 und 12 ebenfalls gezeigt: Die Flanschplatte 28 ist auf der von der Flanschfläche 24 abgewandten Seite um das Loslager-Befestigungsloch 36' herum nämlich mit einer Schräge 50 versehen, die ein geringfügiges Einfedern des Zugbunds 40' an der dem Loslager-Befestigungsloch 36' zugeordneten Stützhülse 38' gestattet bevor Letztere mit einer ringförmigen Stirnfläche 52 an einer in der zugeordneten Zentrieraussparung 48' vorgesehenen ringförmigen Anschlagfläche 54 zur Anlage gelangt. Zur Vereinfachung der Darstellung ist in Fig. 9 der Zustand unmittelbar vor dem Einfedern des Zugbunds 40' gezeigt. Der Kraftfluss wird hier ausgehend vom Kopf der Befestigungsschraube 42' also aufgeteilt: ein Teil der Anzugskraft geht direkt über den Hülsenabschnitt der Stützhülse 38' und die aneinander anliegenden Flächen 52, 54 in die Trennwand 26 des Getriebegehäuses 14; der andere Teil der Anzugskraft wird über den tellerfederartig wirkenden Zugbund 40' in die Flanschplatte 28 geleitet und drückt Letztere mit der Flanschfläche 24 spielfrei gegen die Gegenfläche an der Trennwand 26 des Getriebegehäuses 14.

Zur Abdichtung ist zwischen der Flanschplatte 28 der Betätigungsvorrichtung 10 und der Trennwand 26 des Getriebegehäuses 14 eine Flanschdichtung 56 vorgesehen. Genauer gesagt ist, wie insbesondere die Fig. 2, 5, 7, 8, 10 bis 13, 18 und 19 zeigen, die Flanschplatte 28 im Bereich der Flanschfläche 24 zwischen bzw. "innerhalb" der Befestigungslöcher 36, 36', 36'' und um die Zylindergehäuse 18 herum mit einer umlaufenden Vertiefung 58 zur Aufnahme der Flanschdichtung 56 versehen. Letztere besteht im dargestellten Ausführungsbeispiel aus einem elastischen Dichtungswerkstoff, wie z.B. ACM (Elastomer auf Basis Acrylatkautschuk), der vor dem Aushärten pastös in zwei unmittelbar aufeinanderfolgenden Lagen mittels Nadeldosierung aufgebracht wird, wobei die Dosiernadel kontinuierlich dem Verlauf der Vertiefung 58 folgend über der Flanschfläche 24 verfahren wird. Hierbei wird in einem ersten Gang zunächst ein breiterer, einer verliersicheren Verankerung an der Flanschplatte 28 dienender Basisabschnitt 60 erzeugt, auf dem sodann in einem zweiten Gang ein dünnerer Dichtabschnitt 62 aufgetragen wird. Der dünnere Dichtabschnitt 62 steht, wie insbesondere in den Fig. 7, 8, 11 bis 13 und 19 zu erkennen ist, im fertigen, ausgehärteten Zustand der Flanschdichtung 56 über die Flanschfläche 24 vor, so dass er im montierten Zustand der Betätigungsvorrichtung 10 unter elastischer Verformung abdichtend gegen die Gegenfläche an der Trennwand 26 des Getriebegehäuses 14 gepresst ist, was in den Fig. 5, 7 und 8 zur Vereinfachung der Darstellung indes nicht gezeigt ist. Auf diese Weise ist eine Medientrennung durch die Betätigungsvorrichtung 10 möglich: so kann auf der in Fig. 5 linken, Ansteuerseite der Trennwand 26, auf der sich auch die Kupplung(en), Ventile etc. (nicht gezeigt) befinden können, mit einem anderen Hydrauliköl gearbeitet werden als auf der in Fig. 5 rechten, Übersetzungsseite der Trennwand 26, wo die Zahnradsätze (nicht dargestellt) angeordnet sind. Gemäß insbesondere den Fig. 1, 2 und 18 ist die Flanschplatte 28 im Übrigen zwischen den Befestigungslöchern 36, 36', 36'' und den Zylindergehäusen 18 auf der Vorderseite und der Rückseite mittels Rippen gegen übermäßige, der Flanschdichtigkeit abträgliche Verformungen geeignet versteift, wie in den genannten Figuren exemplarisch mit 64 gekennzeichnet.

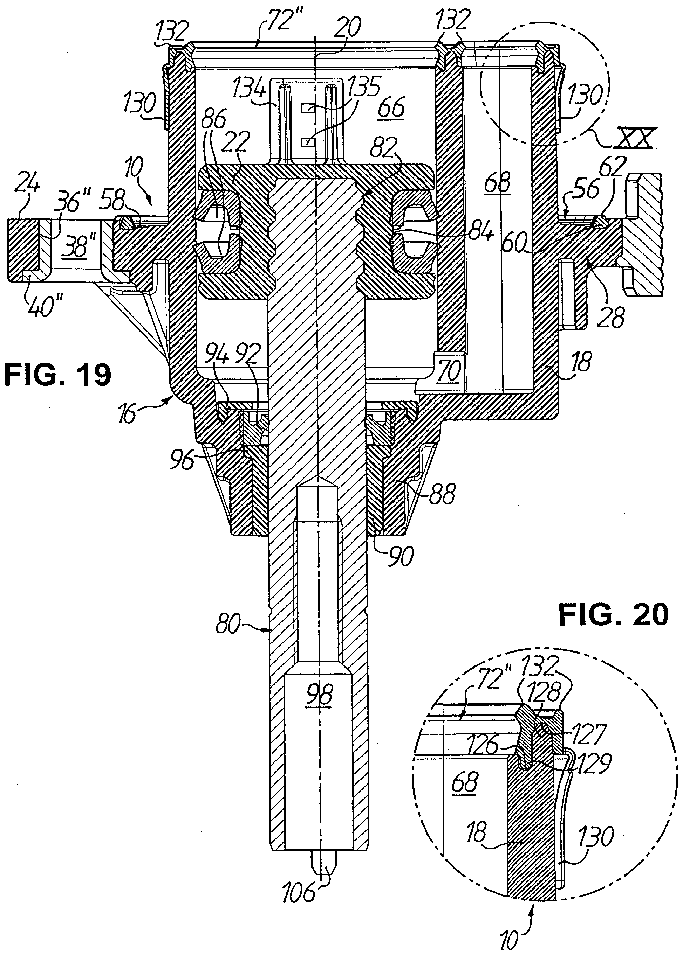

Weitere Einzelheiten der Stellzylinder 16, die mit ihren Zylindergehäusen 18 zu beiden Seiten von der Flanschplatte 28 vorkragen, sind insbesondere den Fig. 5, 13 und 19 zu entnehmen. Demgemäß hat jedes Zylindergehäuse 18 einen Zylinderraumabschnitt 66 zur Aufnahme des jeweiligen Stellkolbens 22 und - wie am besten in den Fig. 13 und 19 zu sehen ist - einen sich parallel zum Zylinderraumabschnitt 66 erstreckenden Druckanschlussabschnitt 68, der über einen quer zur Zylinderachse 20 verlaufenden Kanal 70 - von der Seite der Flanschfläche 24 aus gesehen - hinter dem Stellkolben 22 mit dem Zylinderraumabschnitt 66 fluidverbunden ist. Die Zylinderraumabschnitte 66 und die Druckanschlussabschnitte 68 der Stellzylinder 16 sind an ihren von der Flanschfläche 24 beabstandeten, offenen Enden jeweils mit einer Druckdichtung 72, 72', 72'' versehen, welche, wie in Fig. 5 gezeigt, gegenüber der Trennwand 26 des Getriebegehäuses 14 abdichtet und die nachfolgend noch in verschiedenen Varianten beschrieben werden wird. Im Ergebnis ist der jeweilige Stellkolben 22 auf seiner einen, (Kreisflächen-)Seite über das offene Ende des Zylinderraumabschnitts 66 und auf seiner anderen, (Ringflächen-)Seite über das offene Ende des Druckanschlussabschnitts 68 druckbeaufschlagbar. In Fig. 5 ist der hierfür am offenen Ende des Zylinderraumabschnitts 66 benötigte Druckanschluss in der Trennwand 26 des Getriebegehäuses 14 bei 74 schematisch dargestellt; der am offenen Ende des Druckanschlussabschnitts 68 vorgesehene weitere Druckanschluss in der Trennwand 26 des Getriebegehäuses 14 ist indes nicht gezeigt. Für eine Entlüftung des Stellzylinders 16 zur Ansteuerseite hin ist in Fig. 5 ein Entlüftungskanal 76 mit einer Entlüftungsblende 78 angedeutet.

Gemäß den Fig. 5, 13 und 19 besteht der Stellkolben 22 ebenfalls aus einem Kunststoff, etwa Polyphtalamid (PPA) mit einem vorbestimmten Glasfaseranteil von z.B. 50%, der mittels Spritzgießen formschlüssig auf eine Kolbenstange 80 aus einem Leichtmetall, wie beispielsweise einer Aluminiumlegierung, aufgespritzt ist, wozu die Kolbenstange 80 endseitig am Außenumfang mit einer Profilierung 82 versehen ist. Der Stellkolben 22 weist außenumfangsseitig eine breite Ringnut 84 auf, in der zwei elastomere Nutringe 86 in an sich bekannter Weise so aufgenommen sind, dass deren Dichtlippen einander zugewandt sind. Die Nutringe 86 wirken mit der Innenwand des Zylinderraumabschnitts 66 dichtend zusammen, um die stirnseitigen Wirkflächen des Stellkolbens 22 voneinander zu trennen und dabei eine Druckdifferenz am Stellkolben 22 und somit eine Verschiebung des Stellkolbens 22 zu ermöglichen.

Wie am besten in den Fig. 1, 5, 13 und 19 zu sehen ist, ist jedes Zylindergehäuse 18 an einem über die Flanschplatte 28 auf der von der Flanschfläche 24 abgewandten Seite vorstehenden Ende einstückig mit einem außen verrippten Gehäusefortsatz 88 zur Aufnahme einer Führungsbuchse 90 aus einem Kunststoff, wie z.B. Polyphenylensulfid (PPS), ausgebildet, in der die mit dem jeweiligen Stellkolben 22 verbundene Kolbenstange 80 axial geführt ist. In dem Gehäusefortsatz 88 ist des Weiteren eine mit der Kolbenstange 80 dichtend zusammenwirkende, sich an die Führungsbuchse 90 in axialer Richtung zum Stellkolben 22 hin anschließende Stangendichtung 92 aufgenommen. Ein am Gehäusefortsatz 88 mittels Ultraschallschweißen angebrachter ringförmiger Deckel 94 aus einem Kunststoff, wie der Kunststoff des Zylindergehäuses 18, sichert sowohl die Führungsbuchse 90, die mit einem Ringbund 96 an einem Absatz im Gehäusefortsatz 88 anliegt, als auch die Stangendichtung 92 im Gehäusefortsatz 88.

Gemäß Fig. 5 ist an dem über den Gehäusefortsatz 88 in einer Richtung weg von der Flanschplatte 28 vorstehenden Ende der Kolbenstange 80 die - im dargestellten Ausführungsbeispiel rohrförmige - Schaltstange 12 angebracht, wozu die Kolbenstange 80 eine stirnseitig eingebrachte Gewindebohrung 98 aufweist. In der Schaltstange 12 sind mit axialem Abstand zwei ringförmige metallische Führungsteile 100, 102 befestigt, z.B. angeschweißt, über die die Schaltstange 12 im Wesentlichen radialspielfrei auf die Kolbenstange 80 aufgeschoben ist. Eine das in Fig. 5 rechte Führungsteil 102 durchgreifende Kopfschraube 104 ist in die Gewindebohrung 98 der Kolbenstange 80 eingeschraubt, um Schaltstange 12 und Kolbenstange 80 zug- und druckfest miteinander zu verbinden. Hierbei greifen am freien Ende der Kolbenstange 80 vorgesehene, entlang der Zylinderachse 20 vorstehende Vorsprünge 106 in zugeordnete, in Umfangsrichtung gesehen im Wesentlichen komplementär geformte Aussparungen 108 des in Fig. 5 rechten Führungsteils 102 ein, um die Kolbenstange 80 und damit den Stellkolben 22 gegen ein Verdrehen im Zylindergehäuse 18 an der an der Schaltstange 12 befestigten, geeignet abgestützten Schaltgabel (nicht gezeigt) zu sichern. Insoweit ist ersichtlich, dass die Schaltstange 12 nach Maßgabe der Druckbeaufschlagung des Stellkolbens 22 in Fig. 5 nach rechts oder links (siehe den Doppelpfeil) verschoben oder in einer bestimmten Axialstellung gehalten werden kann, wobei der Sensor 30 und das Signalelement 32 infolge der Verdrehsicherung des Stellkolbens 22 im Zylindergehäuse 18 stets in Überdeckung bleiben.

Einzelheiten zu den bereits erwähnten, verschiedenen Varianten der elastomeren, beispielsweise aus einem Elastomer auf Basis Acrylnitril-Butadien-Styrol-Kautschuk (NBR) geformten Druckdichtungen 72, 72', 72'' sind den Fig. 5, 6, 13 und 16 (erste Variante), 14 (zweite Variante) und 18 bis 20 (dritte Variante) zu entnehmen.

Bei der ersten und zweiten Variante der Druckdichtungen 72, 72' sind die Zylinderraum- und Druckanschlussabschnitte 66, 68 der Zylindergehäuse 18 an ihren offenen Enden jeweils mit einer Ringaussparung 110, 110' zur Aufnahme der zugeordneten Druckdichtung 72, 72' versehen, die unter Druckbeaufschlagung die Dichtwirkung verstärkend ausgebildet ist und in beiden Fällen einen ringförmigen Grundkörper 112, 112' aufweist. Bei der ersten Variante der Druckdichtung 72 ist, wie insbesondere die Fig. 6 zeigt, zu beiden Längsseiten des Grundkörpers 112 eine umlaufende Dichtlippe 114 angeformt, die sich unter radialer Druckbeaufschlagung an die benachbarte Stirnfläche in der Ringaussparung 110 des Zylindergehäuses 18 bzw. an der Trennwand 26 des Getriebegehäuses 14 anlegt, um in axialer Richtung abzudichten.

Bei der zweiten Variante der Druckdichtung 72' hingegen ist gemäß Fig. 14 der ringförmige, mit einer einvulkanisierten Ringarmierung 115 ausgesteifte Grundkörper 112' auf einer Längsseite mit einem über das jeweilige offene Ende des Zylinderraumabschnitts 66 bzw. des Druckanschlussabschnitts 68 vorstehenden, in der Draufsicht gesehen ringförmigen und im Querschnitt gesehen balligen Dichtwulst 116 versehen. Auf der anderen Längsseite des Grundkörpers 112' ist radial außen eine radial wirkende Dichtlippe 118 angeformt, die zusammen mit einem sich in axialer Richtung erstreckenden, radial inneren Grundkörperfortsatz 120 eine Ringkammer 122 begrenzt, welche über radial verlaufende Durchbrüche 124 im Grundkörperfortsatz 120 druckbeaufschlagbar ist, um die Druckdichtung 72' mit ihrem Dichtwulst 116 ringkolbenartig gegen die Trennwand 26 des Getriebegehäuses 14 zu pressen. Diesen beiden Varianten der Druckdichtungen 72, 72' ist insoweit gemein, dass sie grundsätzlich geeignet sind, unter Druckbeaufschlagung etwa vorhandene Axialspalte problemlos dicht zu überbrücken.

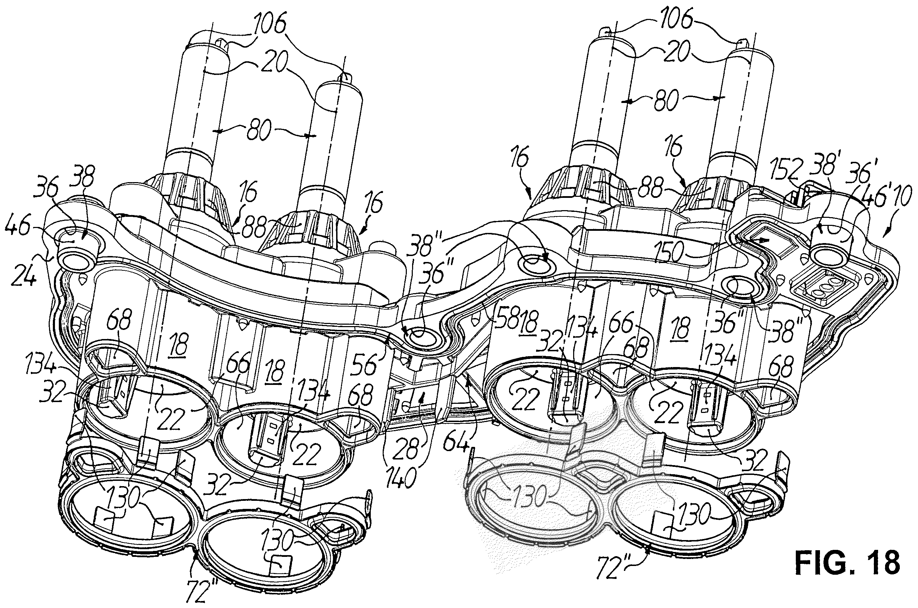

Bei der in den Fig. 18 bis 20 dargestellten dritten Variante der Druckdichtungen 72" sind wenigstens die Druckdichtungen an den offenen Enden des Zylinderraumabschnitts 66 und des Druckanschlussabschnitts 68 eines jeden Zylindergehäuses 18, im Ausführungsbeispiel der Fig. 18 sogar sämtliche trennwandseitigen Druckdichtungen von jeweils zwei Zylindergehäusen 18 montagefreundlich zu einer Formdichtung zusammengefasst, die auf die offenen Enden aufsteckbar ausgebildet ist. Hierzu sind an den offenen Enden der Zylindergehäuse 18 sowie an den Druckdichtungen 72'' Axialnuten 126 bzw. 127 ausgebildet, in die axial vorspringende Stege 128 bzw. 129 am jeweils anderen Teil einsteckbar sind. Außen an den Druckdichtungen 72'' einteilig angeformte Laschen 130 dienen bei diesem Ausführungsbeispiel zur Sicherung gegen ein Verlieren der jeweiligen Druckdichtung 72'' im unmontierten Zustand der Betätigungsvorrichtung 10, wobei die Laschen 130 mit einem geeigneten Klebstoff am Außenumfang der Zylindergehäuse 18 befestigt sind. In dem im bzw. am Getriebegehäuse 14 montierten Zustand der Betätigungsvorrichtung 10 dichten stirnseitig an den Druckdichtungen 72'' vorgesehene Dichtlippen 132 gegenüber der Trennwand 26 des Getriebegehäuses 14 ab und halten die jeweilige Druckdichtung 72'' in Position.

Eingangs wurde schon angesprochen, dass die mittels der Stellzylinder 16 der Betätigungsvorrichtung 10 unabhängig voneinander bewirkbaren, axialen Stellbewegungen hubsensiert sind, wozu jedem Stellzylinder 16 ein Sensor 30 und Signalelement 32 zugeordnet ist. In den dargestellten Ausführungsbeispielen ist hierzu, wie am besten in den Fig. 5, 16 und 17 zu sehen ist, jeder Stellkolben 22 am Rand seiner Stirnfläche mit einem beim Spritzgießen des Stellkolbens 22 einteilig angeformten Sensierfortsatz 134 versehen, an dem ein Magnet als Signalelement 32 durch Kunststoffum- bzw. -anspritzen angebracht ist. Der Magnet wird hierbei durch NdFeB-Partikel gebildet, die mittels eines Kunststoffs, z.B. Polyphenylensulfid (PPS) zu einer spritzgießfähigen "Magnetmasse" gebunden sind. Beim Spritzgießen fließt diese Masse in am Sensierfortsatz 134 vorgesehene Aussparungen 135 und Hinterschnitte 136 (siehe die Fig. 5, 13, 16, 17 und 19), so dass das Signalelement 32 im Ergebnis durch Formschluss verliersicher am Stellkolben 22 befestigt ist.

Was die Anbindung des Sensors 30 am jeweiligen Zylindergehäuse 18 angeht, sind in den Figuren beispielhaft zwei Alternativen gezeigt, denen gemein ist, dass die Sensoren 30, hier Hall-Elemente, auf einer dünnen Flexleiterplatte 138, z.B. auf Basis von Polyimid-Folien, bestückt sind, über die die Sensoren 30 mit der elektrischen Schnittstelle 34 signalverbunden sind. Die Flexleiterplatte 138 ist der Außenkontur der Zylindergehäuse 18 folgend auf der Seite der Flanschfläche 24 der Einheit - und damit in der Trennwand 26 des Getriebegehäuses 14 geschützt - verlegt, wie am besten in den Fig. 2, 10 und 17 zu sehen ist (in Fig. 18 ist die Flexleiterplatte nicht eingezeichnet). Dabei sind nahe den Zylindergehäusen 18 Zungen 140 zum Halten und Führen der Flexleiterplatte 138 einstückig an der Flanschplatte 28 angeformt.

Gemäß insbesondere den Fig. 2, 5 und 10 ist nun bei der ersten Sensoralternative jedes Zylindergehäuse 18 außenumfangsseitig mit einer Aufnahmeaussparung 142 für den zugeordneten Sensor 30 versehen. Die Flexleiterplatte 138 ist auf einer Seite mit den Sensoren 30 bestückt und trägt auf der anderen Seite im Bereich der Sensoren 30 Deckel 143 aus Kunststoff, die mit der Flexleiterplatte 138 z.B. verklebt sind und dazu dienen, die Aufnahmeaussparungen 142 mit den darin aufgenommenen Sensoren 30 schützend zu verschließen. Im dargestellten Ausführungsbeispiel sind die Deckel 143 mit dem jeweiligen Zylindergehäuse 18 laserverschweißt.

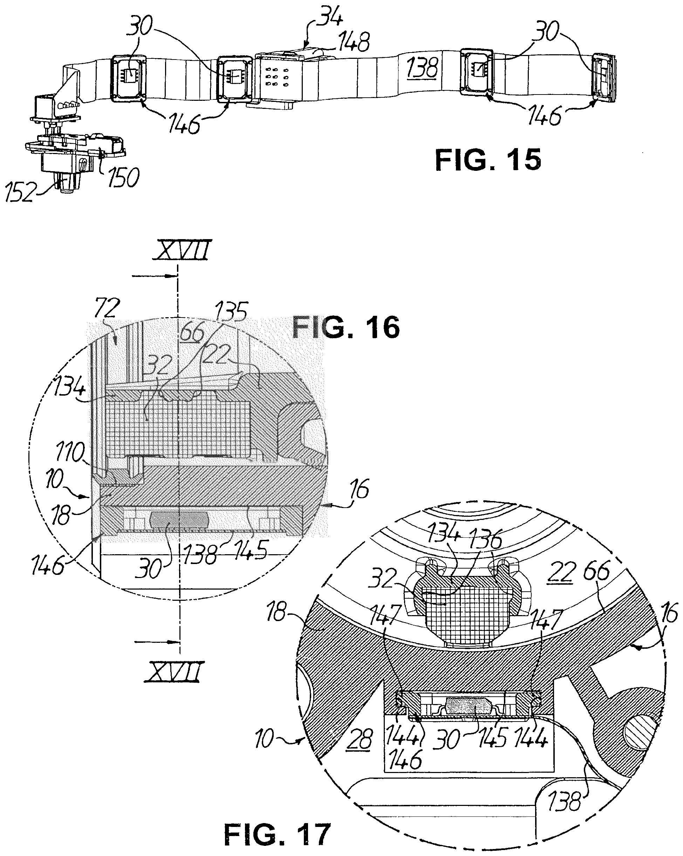

Bei der in den Fig. 15 bis 17 gezeigten zweiten Sensoralternative weist jedes Zylindergehäuse 18 außenumfangsseitig einen von zwei parallelen, einander zugewandten Längsnuten 144 seitlich begrenzten Aufnahmeabschnitt 145 für den zugeordneten Sensor 30 auf. Die auf der Flexleiterplatte 138 bestückten Sensoren 30 sind auf ein und derselben Seite der Flexleiterplatte 138 jeweils von einem Rahmen 146 umgeben, der mit dem jeweiligen Sensor 30 und der Flexleiterplatte 138 vermittels eines in den Figuren nicht zu erkennenden Dichtmaterials, beispielsweise einem UV und thermisch härtenden 1K Epoxydharz, vergossen ist. Der Rahmen 146 weist auf voneinander abgewandten Seiten zwei quer zur Flexleiterplatte 138 verlaufende, parallele Stege 147 auf, die in die Längsnuten 144 am Aufnahmeabschnitt 145 des jeweiligen Zylindergehäuses 18 einsteckbar sind, um dort den zugeordneten Sensor 30 formschlüssig festzulegen. Bei beiden Sensorvarianten ist somit der Sensor 30 möglichst nahe am jeweils zu erfassenden Signalelement 32 angeordnet.

Die ebenfalls auf der Flexleiterplatte 138 vorbestückte elektrische Schnittstelle 34 ist im Übrigen gemäß den Fig. 2 und 10 mit ihrem Kunststoffgehäuse 148 an der Flanschplatte 28 und einem der Zylindergehäuse 18 mittels Laserschweißen befestigt.

In den Fig. 1 bis 3, 10, 15 und 18 ist schließlich noch angedeutet, dass ein Sensor 150, z.B. ein Hallelement, zur Drehzahlsensierung am Kraftfahrzeuggetriebe und/oder ein Anschluss 152 für einen solchen Sensor (nicht gezeigt) - das in den Fig. 1 und 2 dargestellte Kabel führt zu diesem - in der Einheit, genauer in der Flanschplatte 28 integriert und zur gemeinsamen Kontaktierung ebenfalls über die Flexleiterplatte 138 mit der elektrischen Schnittstelle 34 signalverbunden sein kann. Bei Montage der Betätigungsvorrichtung 10 im Kraftfahrzeuggetriebe muss dann nur noch ein Stecker in die elektrische Schnittstelle 34 eingesteckt werden, um sämtliche Sensoren elektrisch mit der Getriebesteuerung zu verbinden.

Den vorbeschriebenen Sensoralternativen ist gemein, dass die Sensoren 30 zur Positionserfassung der Stellkolben 22, die elektrische Schnittstelle 34 wie auch der Sensor 150 zur Drehzahlsensierung bzw. der Anschluss 152 für einen solchen Sensor in einer Hintereinanderanordnung auf bzw. an ein und derselben, "strangförmigen" Flexleiterplatte 138 vorgesehen sind (vgl. die Fig. 2, 10 und 15). Letztere ist dabei den Außenkonturen der Zylindergehäuse 18 folgend ausschließlich in einem Bereich verlegt bzw. verläuft in einem Bereich, der sich im Wesentlichen quer bzw. im rechten Winkel zu den Betätigungsrichtungen der Stellzylinder 16 erstreckt.

In einer weiteren, nicht dargestellten Alternative kann die flexible Leiterplatte aber auch zwei- oder mehrteilig sein. Bei einer solchen Ausgestaltung können die einzelnen Stränge der flexiblen Leiterplatte, auf denen die jeweiligen, mit der gemeinsamen Schnittstelle (Zentralstecker oder -buchse) signalverbundenen Sensoren bzw. Anschlüsse wiederum hintereinander angeordnet sind, durch eine (oder mehrere) Trägerplatte(n) an der Betätigungsvorrichtung, etwa an der Flanschplatte oder einem der Zylindergehäuse befestigt sein. Hierbei kann die Befestigung mittels z.B. Nieten derart ausgestaltet sein, dass zugleich mit der Befestigung korrespondierende Leiter der einzelnen Stränge der flexiblen Leiterplatte durch das jeweilige Befestigungselement miteinander kontaktiert werden.

Eine hydraulische oder pneumatische Betätigungsvorrichtung für die Betätigung von Stellgliedern in einem Kraftfahrzeuggetriebe umfasst wenigstens zwei Stellzylinder, die jeweils ein Zylindergehäuse und einen darin entlang einer Zylinderachse längsverschieblich geführten Stellkolben aufweisen, der hydraulisch oder pneumatisch beaufschlagbar und mit einem der Stellglieder wirkverbunden ist. Die Stellzylinder sind zu einer Einheit zusammengefasst, die an oder in einem Getriebegehäuse des Kraftfahrzeuggetriebes anflanschbar ist. Jedem Zylindergehäuse ist ein Sensor zur Positionserfassung eines am jeweiligen Stellkolben angebrachten Signalelements zugeordnet. In der Einheit ist eine mit den Sensoren signalverbundene elektrische Schnittstelle integriert, über welche die Sensoren gemeinsam kontaktierbar sind. Ferner ist wenigstens ein Sensor zur Drehzahlsensierung am Kraftfahrzeuggetriebe und/oder ein Anschluss für einen solchen Sensor in der Einheit integriert und ebenfalls zur gemeinsamen Kontaktierung mit der elektrischen Schnittstelle signalverbunden, so dass die Montage und Kontaktierung der Sensorik insgesamt nur einen geringen Aufwand erfordert.

### BEZUGSZEICHENLISTE

- 10: Betätigungsvorrichtung
- 12: Schaltstange
- 14: Getriebegehäuse
- 16: Stellzylinder
- 18: Zylindergehäuse
- 20: Zylinderachse
- 22: Stellkolben
- 24: Flanschfläche
- 26: Trennwand
- 28: Flanschplatte
- 30: Sensor
- 32: Signalelement
- 34: elektrische Schnittstelle
- 36, 36', 36": Befestigungsloch
- 38, 38', 38": Stützhülse
- 40, 40', 40": Zugbund
- 42, 42', 42": Befestigungsschraube
- 44, 44', 44": Gewindebohrung
- 46, 46': Zentrierfortsatz
- 48, 48': Zentrieraussparung
- 50: Schräge
- 52: Stirnfläche
- 54: Anschlagfläche
- 56: Flanschdichtung
- 58: Vertiefung
- 60: Basisabschnitt
- 62: Dichtabschnitt
- 64: Rippen
- 66: Zylinderraumabschnitt
- 68: Druckanschlussabschnitt
- 70: Kanal
- 72, 72', 72": Druckdichtung
- 74: Druckanschluss
- 76: Entlüftungskanal
- 78: Entlüftungsblende
- 80: Kolbenstange
- 82: Profilierung
- 84: Ringnut
- 86: Nutring
- 88: Gehäusefortsatz
- 90: Führungsbuchse
- 92: Stangendichtung
- 94: Deckel
- 96: Ringbund
- 98: Gewindebohrung
- 100: Führungsteil
- 102: Führungsteil
- 104: Kopfschraube
- 106: Vorsprung
- 108: Aussparung
- 110, 110': Ringaussparung
- 112, 112': Grundkörper
- 114: Dichtlippe
- 115: Ringarmierung
- 116: Dichtwulst
- 118: Dichtlippe
- 120: Grundkörperfortsatz
- 122: Ringkammer
- 124: Durchbruch
- 126: Axialnut
- 127: Axialnut
- 128: Steg
- 129: Steg
- 130: Lasche
- 132: Dichtlippe
- 134: Sensierfortsatz
- 135: Aussparung
- 136: Hinterschnitt
- 138: Flexleiterplatte
- 140: Zunge
- 142: Aufnahmeaussparung
- 143: Deckel
- 144: Längsnut
- 145: Aufnahmeabschnitt
- 146: Rahmen
- 147: Steg
- 148: Kunststoffgehäuse
- 150: Sensor
- 152: Anschluss

## Patentansprüche

1. Hydraulische oder pneumatische Betätigungsvorrichtung (10) für die Betätigung von Stellgliedern (12) in einem Kraftfahrzeuggetriebe, mit wenigstens zwei Stellzylindern (16), die jeweils nur ein Zylindergehäuse (18) und jeweils nur einen darin entlang einer Zylinderachse (20) längsverschieblich geführten Stellkolben (22) aufweisen, der hydraulisch oder pneumatisch beaufschlagbar und mit einem der Stellglieder (12) wirkverbunden ist, wobei die wenigstens zwei Stellzylinder (16) zu einer Einheit zusammengefasst sind, die an oder in einem Getriebegehäuse (14) des Kraftfahrzeuggetriebes anflanschbar ist, **dadurch gekennzeichnet, dass** jedem Zylindergehäuse (18) ein Sensor (30) zur Positionserfassung eines am jeweiligen Stellkolben (22) angebrachten Signalelements (32) zugeordnet ist, wobei in der Einheit eine mit den Sensoren (30) signalverbundene elektrische Schnittstelle (34) integriert ist, die zur Aufnahme eines Steckers zur elektrischen Verbindung mit einer Getriebesteuerung ausgebildet ist und über welche die Sensoren (30) gemeinsam kontaktierbar sind und wobei ferner wenigstens ein Sensor (150) zur Drehzahlsensierung am Kraftfahrzeuggetriebe und/oder ein Anschluss (152) für einen Sensor zur Drehzahlsensierung am Kraftfahrzeuggetriebe in der Einheit integriert und ebenfalls zur gemeinsamen Kontaktierung mit der elektrischen Schnittstelle (34) signalverbunden ist.

2. Hydraulische oder pneumatische Betätigungsvorrichtung (10) nach Anspruch 1, wobei die Einheit über eine Flanschfläche (24) einer die Zylindergehäuse (18) verbindenden Flanschplatte (28) an oder in dem Getriebegehäuse (14) des Kraftfahrzeuggetriebes anflanschbar ist und wobei die Sensoren (30; 150), ggf. der Anschluss (152) und die Schnittstelle (34) über eine Flexleiterplatte (138) signalverbunden sind, die der Außenkontur der Zylindergehäuse (18) folgend auf der Seite der Flanschfläche (24) der Einheit verlegt ist.

3. Hydraulische oder pneumatische Betätigungsvorrichtung (10) nach Anspruch 2, wobei jedes Zylindergehäuse (18) außenumfangsseitig eine Aufnahmeaussparung (142) für den zugeordneten Sensor (30) aufweist und wobei die Flexleiterplatte (138) auf einer Seite mit den Sensoren (30) bestückt ist und auf der anderen Seite im Bereich der Sensoren (30) Deckel (143) trägt, die dazu dienen, die Aufnahmeaussparungen (142) mit den darin aufgenommenen Sensoren (30) schützend zu verschließen.

4. Hydraulische oder pneumatische Betätigungsvorrichtung (10) nach Anspruch 2, wobei jedes Zylindergehäuse (18) außenumfangsseitig einen von zwei parallelen, einander zugewandten Längsnuten (144) seitlich begrenzten Aufnahmeabschnitt (145) für den zugeordneten Sensor (30) aufweist und wobei jeder auf der Flexleiterplatte (138) bestückte Sensor (30) auf ein und derselben Seite der Flexleiterplatte (138) von einem Rahmen (146) umgeben ist, der mit dem jeweiligen Sensor (30) und der Flexleiterplatte (138) vermittels eines Dichtmaterials vergossen ist und auf voneinander abgewandten Seiten zwei quer zur Flexleiterplatte (138) verlaufende, parallele Stege (147) aufweist, die in die Längsnuten (144) am Aufnahmeabschnitt (145) des jeweiligen Zylindergehäuses (18) einsteckbar sind, um den zugeordneten Sensor (30) festzulegen.

5. Hydraulische oder pneumatische Betätigungsvorrichtung (10) nach einem der Ansprüche 2 bis 4, wobei nahe den Zylindergehäusen (18) Zungen (140) zum Halten und Führen der Flexleiterplatte (138) einstückig an der Flanschplatte (28) angeformt sind.

6. Hydraulische oder pneumatische Betätigungsvorrichtung (10) nach einem der vorhergehenden Ansprüche, wobei jeder Stellkolben (22) mit einem Sensierfortsatz (134) versehen ist, an dem ein Magnet als Signalelement (32) durch Kunststoffumspritzen angebracht ist.

7. Hydraulische oder pneumatische Betätigungsvorrichtung (10) nach einem der vorhergehenden Ansprüche, wobei jedes Zylindergehäuse (18) an seinem von dem Sensor (30) entfernten Ende mit einem Gehäusefortsatz (88) zur Aufnahme einer Führungsbuchse (90) versehen ist, in der eine mit dem jeweiligen Stellkolben (22) verbundene Kolbenstange (80) geführt ist.

8. Hydraulische oder pneumatische Betätigungsvorrichtung (10) nach Anspruch 7, wobei in dem Gehäusefortsatz (88) auch eine mit der Kolbenstange (80) zusammenwirkende, sich an die Führungsbuchse (90) in axialer Richtung anschließende Stangendichtung (92) aufgenommen ist und wobei ein am Gehäusefortsatz (88) angebrachter ringförmiger Deckel (94) sowohl die Führungsbuchse (90) als auch die Stangendichtung (92) im Gehäusefortsatz (88) sichert.

## Claims

1. Hydraulic or pneumatic actuating device (10) for the actuation of setting elements (12) in a motor vehicle transmission, comprising at least two actuating cylinders (16) each having one cylinder housing (18) only and one actuating piston (22) only, which is guided in the cylinder housing to be longitudinally displaceable along a cylinder axis (20) and which can be acted on hydraulically or pneumatically and is operatively connected with one of the setting elements (12), wherein the at least two actuating cylinders (16) are combined to form a unit which can be flange-mounted on or in a transmission casing (14) of the motor vehicle transmission, **characterized in that** a sensor (30) for positional detection of a signal element (32) mounted on the respective actuating piston (22) is associated with each cylinder housing (18), wherein an electrical interface (34) is integrated in the unit, which is in signal connection with the sensors (30), adapted to receive a plug for electrical connection with a transmission control, and by way of which the sensors (30) can be contacted in common, and wherein in addition at least one sensor (150) for rotational speed sensing at the motor vehicle transmission and/or a terminal (152) for a sensor for rotational speed sensing at the motor vehicle transmission is or are integrated in the unit and similarly disposed in signal connection with the electrical interface (34) for the common contact-making.

2. Hydraulic or pneumatic actuating device (10) according to claim 1, wherein the unit can be flange-mounted on or in the transmission casing (14) of the motor vehicle transmission by way of a flange surface (24) of a flange plate (28) connecting the cylinder housings (18), and wherein the sensors (30; 150), optionally the terminal (152) and the interface (34) are in signal connection by way of a flexible circuit board (138) which is placed on the side of the flange surface (24) of the unit to follow the external contour of the cylinder housings (18) .

3. Hydraulic or pneumatic actuating device (10) according to claim 2, wherein each cylinder housing (18) has at the outer circumferential side a receiving recess (142) for the associated sensor (30), and wherein the flexible circuit board (138) on one side is equipped with the sensors (30) and on the other side carries in the region of the sensors (30) covers (143) serving the purpose of protectively closing the receiving recesses (142) with the sensors (30) received therein.

4. Hydraulic or pneumatic actuating device (10) according to claim 2, wherein each cylinder housing (18) has at the outer circumferential side a receiving section (145), which is laterally bounded by two parallel longitudinal grooves (144) facing one another, for the associated sensor (30), and wherein each sensor (30) fitted to the flexible circuit board (138) is surrounded on one and the same side of the flexible circuit board (138) by a frame (146) which is encapsulated together with the respective sensor (30) and the flexible circuit board (138) by means of a sealing material and has on mutually remote sides two parallel webs (147) which extend transversely to the flexible circuit board (138) and which are insertable into the longitudinal grooves (144) at the receiving section (145) of the respective cylinder housing (18) so as to fix the associated sensor (30).

5. Hydraulic or pneumatic actuating device (10) according to any one of claims 2 to 4, wherein tongues (140) for holding and guiding the flexible circuit board (138) are integrally formed on the flange plate (28) adjacent to the cylinder housings (18) .

6. Hydraulic or pneumatic actuating device (10) according to any one of the preceding claims, wherein each of the actuating pistons (22) is provided with a sensing projection (134) on which a magnet as the signal element (32) is mounted by injection-molded encapsulation by plastic material.

7. Hydraulic or pneumatic actuating device (10) according to any one of the preceding claims, wherein each cylinder housing (18) is provided at the end thereof remote from the sensor (30) with a housing projection (88) for reception of a guide bush (90) in which a piston rod (80) connected with the respective actuating piston (22) is guided.

8. Hydraulic or pneumatic actuating device (10) according to claim 7, wherein a rod seal (92) co-operating with the piston rod (80) and adjoined to the guide bush (90) in axial direction is also received in the housing projection (88), and wherein an annular cover (94) mounted on the housing projection (88) secures both the guide bush (90) and the rod seal (92) in the housing projection (88).

## Revendications

1. Dispositif d'actionnement (10) hydraulique ou pneumatique pour l'actionnement d'actionneurs (12) dans une boîte de vitesse de véhicule automobile, avec au moins deux cylindres de réglage (16) qui présentent respectivement uniquement un boîtier de cylindre (18) et respectivement uniquement un piston de réglage (22) qui y est guidé intérieurement de façon déplaçable longitudinalement le long d'un axe de cylindre (20) et qui peut être alimenté hydrauliquement ou pneumatiquement et est raccordé opérationnellement à l'un des actionneurs (12), les au moins deux cylindres de réglage (16) étant réunis en une unité qui peut être bridée sur ou dans un boîtier de boîte de vitesse (14) de la boîte de vitesse de véhicule automobile,
**caractérisé en ce**
**qu'**un capteur (30) destiné à la détection de position d'un élément de signalisation (32) mis en place sur le piston de réglage (22) respectif est affecté à chaque boîtier de cylindre (18), une interface (34) électrique raccordée en signalisation aux capteurs (30) étant intégrée dans l'unité et étant constituée pour la réception d'une fiche destinée au raccordement électrique à une commande de boîte de vitesse et par le biais de laquelle les capteurs (30) peuvent être contactés conjointement, et en outre au moins un capteur (150) destiné à la détection de la vitesse de rotation sur la boîte de vitesse du véhicule automobile et/ou une connexion (152) pour un capteur destiné à la détection de la vitesse de rotation sur la boîte de vitesse du véhicule automobile étant intégré(e) dans l'unité et étant également raccordé(e) en signalisation à l'interface (34) électrique en vue de la mise en contact conjointe

2. Dispositif d'actionnement (10) hydraulique ou pneumatique selon la revendication 1, l'unité pouvant être bridée sur ou dans le boîtier de boîte de vitesse (14) de la boîte de vitesse du véhicule automobile par le biais d'une surface de bride (24) d'une plaque de bride (28) raccordant le boîtier de cylindre (18), et les capteurs (30 ; 150), éventuellement la connexion (152) et l'interface (34) étant raccordés en signalisation par le biais d'un circuit imprimé souple (138) qui est posé sur le côté de la surface de bride (24) de l'unité en suivant le contour extérieur des boîtiers de cylindre (18).

3. Dispositif d'actionnement (10) hydraulique ou pneumatique selon la revendication 2, chaque boîtier de cylindre (18) présentant, côté pourtour extérieur, un évidement de réception (142) pour le capteur (30) affecté, et le circuit imprimé souple (138) étant équipé des capteurs (30) sur un côté et portant sur l'autre côté, dans la zone des capteurs (30), des couvercles (143) qui servent à fermer de façon protectrice les évidements de réception (142) et les capteurs (30) qui y sont reçus.

4. Dispositif d'actionnement (10) hydraulique ou pneumatique selon la revendication 2, chaque boîtier de cylindre (18) présentant, côté pourtour extérieur, un tronçon de réception (145), limité latéralement par deux rainures longitudinales (144) parallèles tournées l'une vers l'autre, pour le capteur (30) affecté, et chaque capteur (30) installé sur le circuit imprimé souple (138) étant, sur un même côté du circuit imprimé souple (138), entouré d'un cadre (146) qui est scellé avec le capteur (30) respectif et avec le circuit imprimé souple (138) au moyen d'un matériau d'étanchéité, et qui présente, sur des côtés détournés l'un de l'autre, deux barrettes (147) parallèles placées transversalement par rapport au circuit imprimé souple (138) qui peuvent être enfichées dans les rainures longitudinales (144) sur le tronçon de réception (145) du boîtier de cylindre (18) respectif afin d'immobiliser le capteur (30) affecté.

5. Dispositif d'actionnement (10) hydraulique ou pneumatique selon l'une des revendications 2 à 4, des languettes (140) étant formées d'une seule pièce sur la plaque de bride (28) près des boîtiers de cylindre (18) pour retenir et guider le circuit imprimé souple (138).

6. Dispositif d'actionnement (10) hydraulique ou pneumatique selon l'une des revendications précédentes, chaque piston de réglage (22) étant muni d'un prolongement de détection (134) sur lequel un aimant est mis en place par surmoulage de matière plastique en tant qu'élément de signalisation (32).

7. Dispositif d'actionnement (10) hydraulique ou pneumatique selon l'une des revendications précédentes, chaque boîtier de cylindre (18) étant, à son extrémité éloignée du capteur (30), muni d'un prolongement de boîtier (88) destiné à recevoir une douille de guidage (90) dans laquelle est guidée une tige de piston (80) raccordée au piston de réglage (22) respectif.

8. Dispositif d'actionnement (10) hydraulique ou pneumatique selon la revendication 7, dans lequel un joint d'étanchéité de tige (92) coopérant avec la tige de piston (80) et se raccordant à la douille de guidage (90) dans la direction axiale est également reçu dans le prolongement de boîtier (88), et dans lequel un couvercle (94) de forme annulaire mis en place sur le prolongement de boîtier (88) bloque aussi bien la douille de guidage (90) que le joint d'étanchéité de tige (92) dans le prolongement de boîtier (88).
